# EUROPÄISCHE PATENTSCHRIFT

(11) **EP 0 897 101 B1**
(45) Veröffentlichungstag und Bekanntmachung des Hinweises auf die Patenterteilung: **02.11.2005**
(21) Anmeldenummer: 97114067.8
(22) Anmeldetag: 14.08.1997
(51) Int. Cl.: G01F 1/00, G01F 1/66

(54) **Ultraschall-Durchflussmesser**
Ultrasonic flowmeter
Débitmètre à ultrasons

(43) Veröffentlichungstag der Anmeldung: 17.02.1999
(73) Patentinhaber: Landis+Gyr GmbH, 90459 Nürnberg (DE)
(72) Erfinder: Hauenstein, Günther, 63477 Maintal (DE); Falk, Urs, 6312 Steinhausen (CH)
(74) Vertreter: Lagler, Louis

(56) Entgegenhaltungen:
- EP-A- 0 082 275
- EP-A- 0 451 355
- EP-A- 0 559 938
- WO-A-86/02723
- WO-A-94/20822
- FR-A- 2 262 469

## Beschreibung

Die Erfindung betrifft einen Ultraschall-Durchflussmesser der im Oberbegriff des Anspruchs 1 genannten Art.
Solche Durchflussmesser eignen sich zur Erfassung von Strömungsgeschwindigkeiten und darauf aufbauend zur Erfassung von Durchflussmengen und in Kombination mit Temperaturdifferenzmessungen zur Wärmeverbrauchserfassung und -verrechnung.
Aus der internationalen Patentanmeldung WO 86/02723 ist ein Ultraschall-Durchflussmesser mit einem rohrförmigen Gehäuse mit direkter Zuführung der Flüssigkeit, d.h. ohne seitliche Zuleitungen für die Flüssigkeit, bekannt. Die Endteile des Gehäuses sind aufgeweitet und mit Aussengewinden zum Einbau in ein Rohrsystem versehen. Die Ultraschallwandler sind auf der axialen Rohrachse zentriert angeordnet und mittels Wandlerträgern radial an den Endteilen befestigt. Die Ultraschallwandler sind in eigenen, entsprechend dichten Wandlergehäusen im Einlassstutzen bzw. im Auslassstutzen verbaut und somit der Strömung des zu messenden Medium vollständig ausgesetzt. Zur Verkleinerung des Strömungswiderstandes und damit des Druckverlustes sind den Ultraschallwandlern Verdrängungskörper vorgelagert.
Auch die EP 0 559 938 A1 zeigt eine Durchflussmesseinrichtung für flüssige Medien nach dem Ultraschall-Laufzeitprinzip. Ein wesentliches Merkmal der hier offenbarten Anordnung ist die Ausgestaltung des Messrohres mit Umlenkspiegeln und der entsprechend hierzu angeordneten Ultraschallwandler. Diese Ultraschallwandler sind jeweils neben einem Einlass- bzw. einen Auslassstutzen im Bereich des Messrohres angeordnet und durchstossen dieses an entsprechend vorgesehenen Wandlerfenstern zur quer zu den Ultraschallwandlern verlaufenden Strömung des zu messenden Mediums. Die in diesem Messrohr integrierten Spiegel für die Ultraschallwellen sind derart angeordnet, dass sie in einem eigenen Messrohr zunächst vormontiert werden und anschliessend in ein Mantelrohr der gesamten Durchflussmesseinrichtung eingebracht werden.

Der Erfindung liegt die Aufgabe zugrunde, einen Ultraschall-Durchflussmesser vorzuschlagen, der bereits bei kleinen Durchflussmengen eine grosse Dynamik und eine hohe Genauigkeit erreicht, einen möglichst geringen Druckverlust aufweist und einfach herstellbar ist.
Die Erfindung besteht in den in Anspruch 1 angegebenen Merkmalen. Vorteilhafte Ausgestaltungen ergeben sich aus den abhängigen Ansprüchen.
Nachfolgend werden Ausführungsbeispiele der Erfindung anhand der Zeichnung näher erläutert.
Es zeigen:
- Fig. 1: einen Durchflussmesser und
- Fig. 2: einen Ultraschallwandler im Querschnitt.

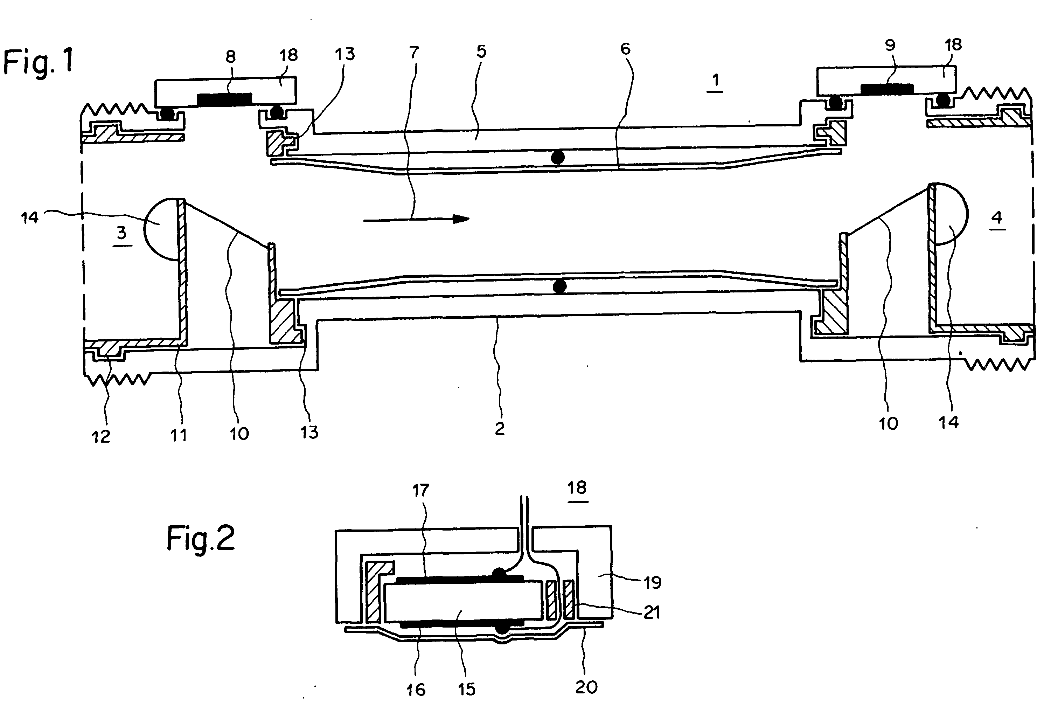

Die Fig. 1 zeigt im Längsschnitt einen Durchflussmesser 1 zur Bestimmung der Menge eines durch ein Rohrsystem strömenden Mediums wie beispielsweise Wasser, Öl oder Gas. Sein Gehäuse 2 weist einen Einlassstutzen 3 und einen Auslassstutzen 4 auf, die durch ein Zwischenteil 5 verbunden sind. Im Zwischenteil 5 ist, fakultativ, ein Messrohr 6 eingesetzt. Das Messrohr 6 besteht z.B. aus massivem oder aus gezogenem nichtrostendem Stahl. Die Flüssigkeit durchströmt den Einlassstutzen 3, gegebenenfalls das Messrohr 6 bzw. das Zwischenteil 5 und den Auslassstutzen 4 in einer im wesentlichen gleichen, durch einen Pfeil dargestellten axialen Richtung 7. Der Einlassstutzen 3 und der Auslassstutzen 4 weisen ein Aussengewinde auf. Ausserhalb des Gehäuses 2, unmittelbar neben dem Aussengewinde des Einlass- bzw. des Auslassstutzens 3, 4, sind Wandlerträger 18 mit Ultraschallwandlern 8 bzw. 9 angeordnet, die z.B. mittels Flanschen befestigt sind, wobei O-Ringe zur Abdichtung dienen. Im Einlass- und im Auslassstutzen 3, 4 sind zudem Spiegel 10 vorhanden, die von einem Kunststoffträger 11 gehalten sind. Die Spiegel 10 dienen der Umlenkung der von den Ultraschallwandlern 8 bzw. 9 abgestrahlten Ultraschallimpulse, so dass ein vom Ultraschallwandler 8 oder 9 abgegebener Ultraschallimpuls das Messrohr 6 durcheilt und vom anderen Ultraschallwandler 9 bzw. 8 empfangen wird. Im Zwischenteil 5 ist daher zwischen den beiden Spiegeln 10 eine Ultraschallmessstrecke gebildet. Die Ultraschallwandler 8 und 9 senden jeweils gleichzeitig einen aus mehreren Ultraschallwellenzügen bestehenden Ultraschallimpuls und empfangen anschliessend den vom anderen Ultraschallwandler 9 bzw. 8 gesendeten, die Ultraschallmessstrecke durcheilt habenden Ultraschallimpuls.

Bei der Montage wird der Kunststoffträger 11 seitlich in den Einlassstutzen 3 bzw. den Auslassstutzen 4 eingeführt, wobei mindestens zwei Rastnasen des Kunststoffträgers 11 in eine umlaufende Nut 12 des Gehäuses 2 einschnappen. Der Kunststoffträger 11 weist weiter zwei Nocken 13 auf, die in derart gestaltete Ausnehmungen des Gehäuses 2 eingreifen, dass die Lage des Spiegels 10 eindeutig und unverrückbar ist. Der Kunststoffträger 11 begrenzt gegebenenfalls die axiale Lagerung des Messrohres 6, das seinerseits mit einem O-Ring im Gehäuse 2 abgestützt ist. Der Kunststoffträger 11 verkleidet mit Vorteil den gesamten Innenraum des Einlass- oder Auslassstutzens 3 bzw. 4. Diese Ausbildung des Gehäuses 2 und des Kunststoffträgers 11 bietet die Vorteile, dass das Gehäuse 2 auf kostengünstige Weise aus Pressmessing hergestellt werden kann und dass der Kunststoffträger 11 problemlos alle Stellen des Gehäuses 2, an denen unerwünschte Reflexionen des Ultraschalls entstehen könnten, verkleidet. Als Material zur Herstellung des Kunststoffträgers 11 ist ultraschallabsorbierendes PVDF (Polyvinylidenfluorid) besonders geeignet, da bei diesem Material eine Dicke von etwa 1.5 mm bereits genügt, um die Reflexionen derart zu mindern, dass eine Erhöhung der Dicke keine merkliche Verbesserung mehr bringt. Der Kunststoffträger 11 ist weiter fakultativ mit einem Verdrängungskörper 14 ausgebildet, der den Strömungswiderstand des Spiegels 10 minimiert.

Der Kunststoffträger 11 ist vorzugsweise derart ausgebildet, dass er in einem Duchflussmesser 1 mit einem Messrohr 6 oder in einem Duchflussmesser 1 ohne Messrohr 6 eingesetzt werden kann. Somit lassen sich z.B. ein für einen Nenndurchfluss von 0.6 m³/h und ein für einen Nenndurchfluss von 1.5 m³/h ausgelegter Duchflussmesser 1 realisieren, die sich nur darin unterscheiden, ob das Messrohr 6 eingesetzt ist oder nicht.

Damit bei vorgegebener Einbaulänge des Durchflussmessers 1 von beispielsweise 110 mm die Ultraschallmessstrecke noch immer genügend lang ist, um die zwischen dem stromaufwärts und dem stromabwärts gesendeten Ultraschallimpuls resultierende Laufzeitdifferenz auch bei kleinem Durchfluss genügend genau messen zu können, ist es erforderlich, dass die Ultraschallwandler 8, 9 möglichst klein sind. Die Länge der Ultraschallmessstrecke verkürzt sich nämlich proportional zum Durchmesser der Ultraschallwandler 8, 9. Es sind deshalb Ultraschallwandler 8, 9 aus piezoelektrischen Keramikscheiben vorgesehen, wobei auf der Keramikscheibe beidseitig kreisförmige Elektroden angebracht sind und wobei der Durchmesser der Keramikscheibe höchstens 9 mm beträgt.

Die Fig. 2 zeigt den Ultraschallwandler 8, der aus einer kreisrunden Keramikscheibe 15 besteht. Die obere und die untere Seite der Keramikscheibe 15 sind mit einer ebenfalls kreisförmigen Elektrode 16 bzw. 17 beschichtet. Der Ultraschallwandler 8 ist in einen Wandlerträger 18 eingebaut, der ein Trägerteil 19, eine Membrane 20 aus nichtrostendem Stahl sowie ein Kunststoffteil 11 umfasst. Der scheibenförmige Ultraschallwandler 8 ist in das Kunststoffteil 21 eingelegt, das zur elektrischen Isolation der Elektroden 16, 17 des Ultraschallwandlers 8 gegenüber dem Trägerteil 19 und der Membrane 20 dient. Das Kunststoffteil 21 mit dem Ultraschallwandler 8 wird in das Trägerteil 19 eingelegt, das anschliessend mit der Membrane 20 verschweisst wird. Das Trägerteil 19 ist bevorzugt ein Stanz- und Biegeteil, es kann aber auch ein Schmiedeteil oder ein Pressteil sein. Die Membrane 20 ist mit dem Trägerteil 19 entlang dessen Randes verschweisst. Die Abmessung des Wandlerträgers 18 beträgt nur etwa 11.5 mm, wenn der Durchmesser der Keramikscheibe 9 mm beträgt. Damit ergibt sich eine Länge der Ultraschallmessstrecke von etwa 80 mm bei einer Einbaulänge des Gehäuses von nur 110 mm.

Die beiden Elektroden 16 und 17 sind kreisförmig und weisen einen Radius R₁ auf, der kleiner als der Radius R₂ des scheibenförmigen Ultraschallwandlers 8 ist. Der Radius R₁ ist vorteilhaft 0.4 mm kleiner als der Radius R₂. Die Form des Kunststoffteils 21 und des Trägerteils 19 sind nun so bemessen, dass einerseits der in das Kunststoffieil 21 eingelegte Ultraschallwandler 8 in Richtung der Schallabstrahlung über das Kunststoffteil 21 und das Trägerteil 19 hinaus übersteht und andererseits der Ultraschallwandler 8 mit radialem Spiel in das Kunststoffteil 21 einlegbar ist. Die Membrane 20 ist nun derart straff auf das Trägerteil 19 aufgeschweisst, z.B. durch Laserschweissen, dass sie den Ultraschallwandler 8 unter Zugspannung hält und ihn axial gegen das Kunststoffteil 21 drückt. Die Elektrode 16 oder die Membrane 20 wurde vor dem Schweissvorgang mit einem elastischen Klebeharzfilm beschichtet, damit die Elektrode 16 und die Membrane 20 elektrisch isoliert und verklebt sind, damit die Schwingungen des Ultraschallwandlers 8 in guter mechanischer Kopplung auf die Membrane 20 übertragen und als Ultraschall an die Flüssigkeit abgegeben werden. Da die Elektrode 16 die Vorderseite nicht bis zum Rand bedeckt, ist ausgeschlossen, dass die Membrane 20 den Klebeharzfilm so weit verdrängen kann, dass ein Kurzschluss zwischen der Elektrode 16 und der Membrane 20 zustande kommt. Falls die Elektrode 16 bis zum Rand der Scheibe reicht, d.h. R₁ = R₂ ist, dann kann die sichere elektrische Isolation zwischen der Elektrode 16 und der Membrane 20 auch mittels eines auf die Elektrode 16 aufgelegten oder aufgeklebten dünnen Kunststoffringes erreicht werden. Andererseits gewährleistet die Einspannung des Ultraschallwandlers 8 durch die Membrane 20, dass dessen Sitz im Wandlerhalter 18 wohl definiert und langzeitstabil ist. Beim Schwingen betragen die Auslenkungen der Membrane 20 in axialer wie in radialer Richtung nur einige Mikrometer. Somit genügt ein radiales Spiel von wenigen Mikrometern oder etwa einem Hundertstel Millimeter, damit die Membrane 20 in makroskopisch definierter Lage schwingen kann, ohne dass die Schwingungen vom Kunststoffteil 21 radial bedämpft werden.

Bevorzugt sind Ultraschallwandler 8, 9 aus Keramikscheiben 15, deren Durchmesser etwa 7.5 mm beträgt. Bei einem Durchmesser von 7.5 mm und einer gewünschten Resonanzfrequenz von 1 MHz beträgt die Dicke der Keramikscheibe 15 etwa 2 mm.

## Patentansprüche

1. Durchflussmesser (1) mit einem Gehäuse (2) mit einem Einlassstutzen (3) und einem Auslassstutzen (4), wobei am Einlassstutzen (3) und am Auslassstutzen (4) je ein Ultraschallwandler (8 bzw. 9) angeordnet ist zur Ausbildung einer von einem Medium in einer axialen Richtung (7) durchströmten Ultraschallmessstrecke,
**dadurch gekennzeichnet,**
- **dass** die Ultraschallwandler (8, 9) am Einlass- bzw. Auslassstutzen (3 bzw. 4) ausserhalb des gehäuses (2) angeordnet sind, wobei von den Ultraschallwendlern (8, 9) emittierte Ultraschallwellen jeweils durch eine Ausnehmung im gehäuse (2) in das gehäuse (2) gelangen können,
- **dass** von den Ultraschallwandlern (8, 9) Ultraschallwellen zu je einem Spiegel (10) im Einlassstutzen (3) und im Auslassstutzen (4) sendbar sind, so dass die Ultraschallwellen von dem einen Ultraschallwandler (8, 9) über die Spiegel (10) zu dem benachbarten Ultraschallwandler (9, 8) führbar sind,
- **dass** die Spiegel (10) von je einem Kunststoffträger (11) gehalten sind, und
- **dass** die Kunststoffträger (11) zur Montage in axialer Richtung (7) durch jeweils eine Öffnung im Einlass- bzw. Auslassstutzen (3 bzw. 4) einführbar sind.

2. Durchflussmesser (1) nach Anspruch 1, **dadurch gekennzeichnet, dass** jeder Kunststoffträger (11) Elemente aufweist, die bei der Montage in Ausnehmungen (12) des Gehäuses (2) einschnappen.

3. Durchflussmesser (1) nach einem der Ansprüche 1 oder 2, **dadurch gekennzeichnet, dass** jeder Kunststoffträger (11) mit einem Verdrängungskörper (14) ausgebildet ist zur Minimierung des Strömungswiderstandes.

## Claims

1. A flow-meter (1) with a housing (2) with an inlet connecting piece (3) and with an outlet connecting piece (4), wherein in each case an ultrasound transducer (8 and 9) is arranged on the inlet connecting piece (3) and on the outlet connecting piece (4) for forming an ultrasound measurement path through which a medium flows in an axial direction (7),
**characterised in that**
- the ultrasound transducers (8,9) on the inlet respectively outlet connecting piece (3 and 4 respectively) are arranged outside the housing (2), wherein ultrasound waves emitted by the ultrasound transducers (8, 9) in each case may get into the housing (2) through a recess in the housing (2),
- that ultrasound waves may be sent from the ultrasound transducers (8, 9) to in each case a mirror (10) in the inlet connecting piece (3) and in the outlet connecting piece (4), so that the ultrasound waves may be led from the one ultrasound transducer (8, 9) to the adjacent ultrasound transducer (9, 8) via the mirrors (10),
- that the mirrors (10) are held by in each case in a plastic carrier (11), and
- that the plastic carriers (11) for assembly in the axial direction (7) may be introduced through in each case an opening in the inlet respectively outlet connecting piece (3 and 4 respectively).

2. A flow-meter (1) according to claim 1, **characterised in that** each plastic carrier (11) comprises elements which on assembly snap into recesses (12) of the housing (12).

3. A flow-meter (1) according to one of the claims 1 or 2, **characterised in that** each plastic carrier (11) is formed with a displacement body (14) for minimising the flow resistance.

## Revendications

1. Débitmètre (1) avec un boîtier (2) avec une goulotte d'entrée (3) et une goulotte de sortie (4) respectivement un transducteur d'ultrasons (8, resp. 9) étant disposé sur la goulotte d'entrée (3) et sur la goulotte de sortie (4) pour former un trajet de mesure par ultrasons, traversé en direction axiale (7) par un fluide,
**caractérisé en ce que**
- les transducteurs d'ultrasons (8, 9) sur la goulotte d'entrée, respectivement de sortie (3, 4) sont placés à l'extérieur du boîtier (2), des ondes d'ultrasons émises par les transducteurs d'ultrasons (8, 9) pouvant arriver dans le boîtier (2) respectivement à travers un évidement dans le boîtier (2),
- les transducteurs d'ultrasons (8, 9) pouvant émettre des ondes d'ultrasons vers respectivement un miroir (10) dans la goulotte d'entrée (3) et dans la goulotte de sortie (4), pour que les ondes d'ultrasons puissent être conduites de l'un des transducteurs d'ultrasons (8, 9), par l'intermédiaire des miroirs (10) vers le transducteur d'ultrasons voisin (9, 8),
- le miroir (10) est maintenu par respectivement un support en matière plastique (11),
- pour le montage en direction axiale (7), les supports en matière plastique (11) peuvent être insérés à travers respectivement un orifice dans la goulotte d'entrée, respectivement de sortie (3, resp. 4).

2. Débitmètre (1) selon la revendication 1, **caractérisé en ce que** chaque support en matière plastique (11) comporte des éléments, qui lors du montage, s'encliquètent dans des évidements (12) du boîtier (2).

3. Débitmètre (1) selon l'une quelconque des revendications 1 ou 2, **caractérisé en ce que** chaque support en matière plastique (11) est conçu avec un organe de refoulement (14), pour minimiser la résistance du courant.
